# EUROPÄISCHE PATENTSCHRIFT

(11) **EP 3 551 428 B1**
(45) Veröffentlichungstag und Bekanntmachung des Hinweises auf die Patenterteilung: **05.03.2025**
(21) Anmeldenummer: 17829946.7
(22) Anmeldetag: 08.12.2017
(51) Int. Cl.: B29C 64/153, B29C 64/35, B29C 35/16, B29C 71/00, B22F 3/24, B22F 10/28, B22F 10/68, B33Y 40/20

(54) **VERFAHREN ZUM NACHBEHANDELN UND NACHBEHANDLUNGSSYSTEM**
METHOD FOR POST-TREATING, AND A POST-TREATMENT SYSTEM
PROCÉDÉ DE POST-TRAITEMENT ET SYSTÈME DE POST-TRAITEMENT

(30) Priorität: 18.01.2017 DE 102017200773
(43) Veröffentlichungstag der Anmeldung: 16.10.2019
(73) Patentinhaber: EOS GmbH Electro Optical Systems, 82152 Krailling (DE)
(72) Erfinder: PFEFFERKORN, Florian, 80689 München (DE)
(74) Vertreter: Prüfer & Partner mbB Patentanwälte · Rechtsanwälte
(86) Internationale Anmeldenummer: PCT/EP2017/081990
(87) Internationale Veröffentlichungsnummer: WO 2018/133991

(56) Entgegenhaltungen:
- DE-A1- 102009 047 237
- DE-T2- 69 333 169
- US-A1- 2007 241 482
- US-A1- 2012 177 696
- US-A1- 2014 283 936

## Beschreibung

Die Erfindung bezieht sich auf ein Verfahren zum Nachbehandeln eines durch selektives schichtweises Verfestigen eines pulverförmigen Aufbaumaterials hergestellten dreidimensionalen Objekts und/oder unverfestigtem Aufbaumaterials, in das das dreidimensionale Objekt eingebettet ist, sowie auf ein entsprechendes Nachbehandlungssystem.

Verfahren und Vorrichtungen zum Herstellen eines dreidimensionalen Objekts durch schichtweises selektives Verfestigen eines pulverförmigen Aufbaumaterials werden beispielsweise beim Rapid Prototyping oder Additive Manufacturing verwendet. Ein Beispiel eines solchen Verfahrens ist unter dem Namen "selektives Lasersintern" oder "selektives Laserschmelzen" bekannt. Ein weiteres Beispiel eines solchen Verfahrens ist als "Multi Jet Fusion" bekannt. Dabei wird wiederholt eine dünne Schicht eines pulverförmigen Aufbaumaterials aufgebracht und das Aufbaumaterial in jeder Schicht durch selektives Bestrahlen von Stellen, die einem Querschnitt des herzustellenden Objekts entsprechen, mit einem Laser selektiv verfestigt.

Die Druckschrift WO 2009/141047 A1 beschreibt ein Verfahren zum Herstellen eines dreidimensionalen Objekts durch selektives Verfestigen eines pulverförmigen Materials an den dem Querschnitt des Objekts in der jeweiligen Schicht entsprechenden Stellen mittels Einwirkung elektromagnetischer Strahlung. Das Pulver ist dabei ein Kunststoffpulver. Nicht verfestigtes Pulver wird nach dem Herstellen des Objekts einer Behandlung mit Wasser oder Wasserdampf unterzogen und anschließend zum Aufbau eines neuen Objekts wiederverwendet.

Nach dem Herstellen des dreidimensionalen Objekts werden das dreidimensionale Objekt und das unverfestigte Aufbaumaterial, in das das dreidimensionale Objekt eingebettet ist, nachbehandelt, um das dreidimensionale Objekt und das unverfestigte Aufbaumaterial abzukühlen.

In der US 2010/0155985 A1 ist vorgeschlagen, ein Kühlfluid, zum Beispiel Stickstoff, durch den Pulverkuchen, der das hergestellte Objekt enthält, zu leiten, um diesen zu kühlen.

Die US 2014/283936 A1 beschreibt eine Vorrichtung zum Ausstoßen bzw. Rückhalten einer Flüssigkeit mit einer Zone zum Ausstoßen bzw. Rückhalten von Flüssigkeit und einer einteiligen dreidimensionale Struktur, die als Schwamm bezeichnet wird und einen Satz von im Wesentlichen drahtähnlichen Elementen oder Drahtelementen umfasst, die voneinander beabstandet sind und sich zwischen der Umfangszone und der Flüssigkeitsausstoßzone bzw. Flüssigkeitsrückhaltezone erstrecken. Die Drahtelemente sind im wesentlichen in einer Strömungsrichtung der Flüssigkeit innerhalb der Vorrichtung orientiert. Die Flüssigkeit wird durch Kapillarität zwischen den Drahtelementen zurückgehalten.

DE 10 2009 047 237 A1 beschreibt eine Spülflüssigkeit zum Lösen von Stützmaterial aus einem dreidimensionalen Druck, welcher Stützmaterial und Baumaterial umfasst. Die Spülflüssigkeit weist eine wässrige Lösung von Industriereiniger auf.

US 2007/0241482 A1 beschreibt die Herstellung dreidimensionaler Objekte durch Schmelzen und Verfestigen von Teilen eines pulverförmigen Materials. Das Entfernen eines Stützmaterials durch ein Lösungsmittel ist beschrieben.

DE 693 33 169 T2 beschreibt das Entfernen von losem Pulver von internen Kanälen eines Körpers, der mit einer Schichtherstellungstechnik produziert wurde. Der Körper wird in ein Flüssigkeitsbad gelegt. Es wird Energie eingebracht, um die Flüssigkeit zum Sieden zu bringen. Es ist beschrieben, dass durch die dadurch erzeugte Fluidbewegung ein Ausstoßen des Pulvers aus den Kanälen bewirkt wird.

Eine Aufgabe vorliegender Erfindung ist es, ein alternatives und/oder verbessertes Verfahren bzw. ein alternatives und/oder verbessertes System zum Nachbehandeln eines durch selektives schichtweises Verfestigen eines pulverförmigen Aufbaumaterials hergestellten dreidimensionalen Objekts und/oder unverfestigten Aufbaumaterials, in das das dreidimensionale Objekt eingebettet ist, zur Verfügung zu stellen.

Diese Aufgabe wird durch ein Verfahren gemäß Anspruch 1 bzw. ein Nachbehandlungssystem gemäß Anspruch 14 gelöst. Dabei kann das erfindungsgemäße Nachbehandlungssystem auch durch weiter unten in der Beschreibung bzw. in den Unteransprüchen angeführte auf das erfindungsgemäße Verfahren gerichtete Merkmale weitergebildet sein. Umgekehrt kann dabei auch das erfindungsgemäße Verfahren durch weiter unten in der Beschreibung angeführte auf das erfindungsgemäße Nachbehandlungssystem gerichtete Merkmale weitergebildet sein.

**Das erfindungsgemäße** Verfahren dient zum Nachbehandeln eines unverfestigten Aufbaumaterials, in das ein durch selektives schichtweises Verfestigen eines pulverförmigen Aufbaumaterials hergestelltes dreidimensionales Objekt eingebettet ist, oder des dreidimensionalen Objekts und des unverfestigten Aufbaumaterials, in das das hergestellte dreidimensionale Objekt eingebettet ist, umfasst die Schritte: Behandeln des unverfestigten Aufbaumaterials bzw. des hergestellten dreidimensionale Objekts und des unverfestigten Aufbaumaterials mit einer Flüssigkeit, und Trocknen zumindest eines Teils des mit der Flüssigkeit behandelten unverfestigten Aufbaumaterials bzw. des mit der Flüssigkeit behandelten dreidimensionalen Objekts und des mit der Flüssigkeit behandelten unverfestigten Aufbaumaterials, wobei die Flüssigkeit (33) eine flüssige Trägersubstanz und mindestens eine weitere Substanz, die die Oberflächenspannung der Trägersubstanz herabsetzt, enthält.

Durch die Verwendung einer solchen Flüssigkeit kann die Flüssigkeit in das unverfestigte Aufbaumaterial migrieren, in anderen Worten: die Flüssigkeit kann das unverfestigte Aufbaumaterial besser durchdringen und dadurch auf einer größeren Wirkfläche kühlen. Dadurch kann beispielsweise die Abkühlung des dreidimensionalen Objekts und/oder des unverfestigten Aufbaumaterials beschleunigt werden.

Durch die Erfindung ist es beispielsweise auch möglich, den Abbau (Alterung) des Materials des hergestellten dreidimensionalen Objekts und/oder des unverfestigten Aufbaumaterials zu verringern bzw. zu stoppen, wodurch die Qualität des hergestellten dreidimensionalen Objekts und/oder die Wiederverwendbarkeit des unverfestigten Aufbaumaterial verbessert werden kann.

Ferner ist es durch die Erfindung beispielsweise auch möglich, die Qualität des hergestellten dreidimensionalen Objekts, etwa dessen Maßhaltigkeit und Formtreue, zu verbessern. Insbesondere können ungleichmäßiger Schwund und/oder Verformungen, die beim langsamen Abkühlen z.B. aufgrund einer inhomogenen Temperaturverteilung im abkühlenden Objekt auftreten, teilweise oder vollständig vermieden werden.

Des Weiteren ist es durch die Erfindung beispielsweise auch möglich, den vor der Nachbehandlung vorhandenen Zustand des dreidimensionalen Objekts und/oder des unverfestigten Aufbaumaterials zumindest teilweise einzufrieren, d.h. das dreidimensionale Objekt und/oder das unverfestigte Aufbaumaterial einem Quenching zu unterziehen. Unter Quenching wird ein rasches bzw. plötzliches Abkühlen bzw. Abschrecken eines Objekts bzw. Bauteils und/oder Materials verstanden.

Vorzugsweise ist die weitere Substanz flüchtig, insbesondere flüchtiger als die Trägersubstanz. Dadurch kann beispielsweise das Verdampfen der Flüssigkeit nach dem Behandeln des hergestellten dreidimensionalen Objekts und/oder des unverfestigten Aufbaumaterials vereinfacht werden.

Beispielsweise enthält die weitere Substanz einen Stoff, der aus der Gruppe bestehend aus acyclischen aliphatischen Kohlenwasserstoffen und cyclischen aliphatischen Kohlenwasserstoffen, wobei es sich jeweils um Alkane, Alkene und Alkine handeln kann, aromatischen Kohlenwasserstoffen, Halogenkohlenwasserstoffen, Alkoholen, Ketonen, Aldehyden, Carbonsäuren, Ethern sowie Estern ausgewählt ist.

Vorzugsweise ist die weitere Substanz ein Alkohol, bevorzugt ein acyclischer Alkohol, mehr bevorzugt ein acyclischer Alkohol mit einer Summenformel CₙH₂ₙ₊₂O mit n = 1, 2, 3 oder 4, noch mehr bevorzugt Ethanol. Dadurch können gemäß den Versuchen der Erfinder beispielsweise die Abkühlgeschwindigkeit, die Wiederverwendbarkeit des unverfestigten Aufbaumaterials und/oder die Qualität des hergestellten dreidimensionalen Objekts besonders günstig beeinflusst werden.

Vorzugsweise beträgt die Konzentration der weiteren Substanz in der Flüssigkeit mindestens 0,1 Gewichtsprozent, bevorzugt mindestens 0,5 Gewichtsprozent, mehr bevorzugt mindestens 1 Gewichtsprozent, noch mehr bevorzugt mindestens 2,5 Gewichtsprozent, am meisten bevorzugt mindestens 5 Gewichtsprozent, und/oder höchstens 45 Gewichtsprozent, bevorzugt höchstens 35 Gewichtsprozent, mehr bevorzugt höchstens 25 Gewichtsprozent, noch mehr bevorzugt höchstens 15 Gewichtsprozent, am meisten bevorzugt höchstens 10 Gewichtsprozent. Mit derartigen Konzentrationen kann eine Umsetzung beispielsweise ohne weitere sicherheitstechnische Maßnahmen wie beispielsweise spezielle explosionsgeschütze Vorrichtungen erfolgen. Gemäß den Versuchen der Erfinder können mit derartigen Konzentrationen beispielsweise die weiter oben beschriebenen vorteilhaften Effekte des erfindungsgemäßen Verfahrens in besonders ausgeprägter Weise erzielt werden.

Vorzugsweise enthält die Trägersubstanz Wasser, wobei bevorzugt die Konzentration des Wassers in der Flüssigkeit mindestens 65 Gewichtsprozent, mehr bevorzugt mindestens 75 Gewichtsprozent, noch mehr bevorzugt mindestens 85 Gewichtsprozent, am meisten bevorzugt mindestens 90 Gewichtsprozent beträgt, und/oder wobei bevorzugt die Konzentration des Wassers in der Flüssigkeit höchstens 99,5 Gewichtsprozent, mehr bevorzugt höchstens 99 Gewichtsprozent, noch mehr bevorzugt höchstens 97,5 Gewichtsprozent, am meisten bevorzugt höchstens 95 Gewichtsprozent beträgt. Durch diese Wahl der Trägersubstanz und ihrer Konzentration können beispielsweise die Kosten für die Flüssigkeit niedrig gehalten werden und die weiter oben beschriebenen positiven Effekte des erfindungsgemäßen Verfahrens in besonders ausgeprägter Weise verwirklicht werden.

Vorzugsweise enthält das pulverförmige Aufbaumaterial mindestens eines der Polymere aus der Gruppe bestehend aus Polyetherimiden, Polycarbonaten, Polyphenylsulfonen, Polyphenyloxiden, Polyethersulfonen, Acrylnitril-Butadien-Styrol-Copolymerisaten, Polyacrylaten, Polyestern, Polyamiden, Polyaryletherketonen, Polyethern, Polyurethanen, Polyimiden, Polyamidimiden, Polyolefinen sowie Copolymeren, welche mindestens zwei verschiedene Monomereinheiten der vorgenannten Polymere enthalten, und/oder mindestens ein Polyblend auf der Basis von mindestens zwei der vorgenannten Polymere und Copolymere enthält, wobei das pulverförmige Aufbaumaterial bevorzugt ein Polyamid enthält, wobei das pulverförmige Aufbaumaterial mehr bevorzugt ein Polyamid 12 (PA12) enthält. Bei Verwendung eines derartigen Aufbaumaterials können beispielsweise die vorteilhaften Effekte des erfindungsgemäßen Verfahrens, insbesondere der Stopp des Abbaus des Materials des dreidimensionalen Objekts und/oder des unverfestigten Aufbaumaterials, besonders ausgeprägt sein.

Vorzugsweise ist die weitere Substanz eine Substanz, die bei der Herstellung des pulverförmigen Aufbaumaterials zur Anwendung gekommen ist. Dadurch kann beispielsweise verhindert werden, dass das unverfestigte Aufbaumaterial durch das erfindungsgemäße Verfahren verunreinigt wird.

Vorzugsweise weist die Flüssigkeit vor dem Nachbehandeln eine Temperatur, die geringer als die Temperatur des hergestellten dreidimensionalen Objekts ist, auf. Dadurch ist es möglich, dass das dreidimensionale Objekt durch das Behandeln mit der Flüssigkeit abgekühlt wird.

Vorzugsweise wird das Verfahren so durchgeführt, dass zumindest ein Teil des unverfestigten Aufbaumaterials nach dem Nachbehandeln eine Temperatur hat, die unterhalb der Glasübergangstemperatur eines im Aufbaumaterial enthaltenen Polymers liegt. Dadurch kann beispielsweise der Alterungseffekt des Pulvers minimiert werden.

Vorzugsweise wird das Verfahren so durchgeführt, dass das hergestellte dreidimensionale Objekt und/oder das unverfestigte Aufbaumaterial nach dem Nachbehandeln eine Temperatur hat, die im Wesentlichen der Raumtemperatur entspricht. Beispielsweise ist es dadurch möglich, das dreidimensionale Objekt bzw. das unverfestigte Aufbaumaterial unmittelbar einer Nachbearbeitung und/oder Nachbehandlung zu unterziehen.

Vorzugsweise wird das gesamte hergestellte dreidimensionale Objekt, also auch dessen Inneres, auf eine Temperatur unterhalb der Glasübergangstemperatur eines Polymers, das im Aufbaumaterial enthalten ist, abgekühlt. Dadurch lassen sich beispielsweise im Zuge des Abkühlens auftretende Verformungen des dreidimensionalen Objekts ("Verzug") minimieren oder vollständig verhindern.

Vorzugsweise erfolgt das Behandeln mit der Flüssigkeit dadurch, dass das dreidimensionale Objekt und/oder das unverfestigte Aufbaumaterial zumindest teilweise in die Flüssigkeit eingetaucht werden. Auf diese Weise kann beispielsweise rasch inniger Kontakt zwischen der Flüssigkeit und dem dreidimensionalen Objekt bzw. dem unverfestigten Aufbaumaterial hergestellt werden incl. einer Durchdringung des Objekts bzw. des unverfestigten Aufbaumaterials mit der Flüssigkeit. Das Behandeln mit der Flüssigkeit kann auch durch Übergießen des dreidimensionalen Objekts und/oder des unverfestigten Aufbaumaterials mit der Flüssigkeit erfolgen. Vorzugsweise wird das dreidimensionale Objekt und/oder das unverfestigte Aufbaumaterial dabei in bzw. über einem Behältnis, beispielsweise einer Wanne, platziert. Auf diese Weise kann die Flüssigkeit aufgefangen und z.B. für eine spätere Aufbereitung und/oder Wiederverwendung gesammelt werden.

Beim Eintauchen des dreidimensionalen Objekts und/oder des unverfestigten Aufbaumaterials wird insbesondere bevorzugt eine Kraft auf das dreidimensionale Objekt und/oder das unverfestigte Aufbaumaterial ausgeübt, die der Auftriebskraft, die auf das dreidimensionale Objekt und/oder das unverfestigte Aufbaumaterial wirkt, entgegengerichtet ist. So ist es beispielsweise möglich, ein dreidimensionales Objekt und/oder unverfestigtes Aufbaumaterial mit einem spezifischen Gewicht, das kleiner ist als das spezifische Gewicht der Flüssigkeit, in die Flüssigkeit einzutauchen.

Vorzugsweise wird das unverfestigte Aufbaumaterial, insbesondere in Kanälen und/oder Hohlräumen des dreidimensionalen Objekts befindliches unverfestigtes Aufbaumaterial, vom dreidimensionalen Objekt abgelöst, wobei das dreidimensionale Objekt und/oder das unverfestigte Aufbaumaterial mit Ultraschall und/oder mit Infraschall und/oder mit mindestens einem Strahl, insbesondere mit mindestens einem Strahl der Flüssigkeit, behandelt werden, und/oder wobei zumindest die Flüssigkeit in Bewegung versetzt, insbesondere geschüttelt und/oder gerührt und/oder geschwenkt, wird. Dadurch können beispielsweise das hergestellte dreidimensionale Objekt und das unverfestigte Aufbaumaterial vollständig und besonders effektiv voneinander getrennt (separiert) werden.

Erfindungsgemäß wird zumindest ein Teil des unverfestigten Aufbaumaterials und/oder des dreidimensionalen Objekts getrocknet, wobei das Trocknen bevorzugt durch Verdampfung bzw. Verflüchtigung der Flüssigkeit und/oder bevorzugt mittels einer Zentrifuge und/oder mittels eines Gasstroms und/oder mittels einer Heizung durchgeführt wird. Die Trocknung kann auch durch weitere Hilfsmittel wie beispielsweise dem Einsatz von Trocknungsmitteln wie Silicagel, Zeolithen und/oder Natriumsulfat beschleunigt werden. Weitere, geeignete Trocknungsmittel sind dem Fachmann geläufig. Ein getrocknetes dreidimensionales Objekt bzw. getrocknetes unverfestigtes Aufbaumaterial können beispielsweise unmittelbar der weiteren Verarbeitung bzw. Bearbeitung zugeführt werden.

Vorzugsweise erfolgt das Nachbehandeln in mindestens zwei nacheinander durchgeführten Nachbehandlungsschritten, wobei mindestens ein Nachbehandlungsschritt mit Hilfe einer weiteren Flüssigkeit erfolgt. Dadurch, dass das dreidimensionale Objekt und/oder das unverfestigte Aufbaumaterial mit verschiedenen Flüssigkeiten behandelt werden, können beispielsweise die weiter oben beschriebenen vorteilhaften Effekte des erfindungsgemäßen Verfahrens verstärkt und/oder mehrere dieser Effekte miteinander kombiniert werden.

Bei der weiteren Flüssigkeit kann es sich beispielsweise um eine Mischung mehrerer Stoffe, insbesondere eine Lösung, beispielsweise eine Lösung aus Wasser und Ethanol, oder einen Reinstoff, beispielsweise Wasser, handeln.

Vorzugsweise erfolgt das Nachbehandeln in mindestens zwei nacheinander durchgeführten Nachbehandlungsschritten, wobei mindestens ein Nachbehandlungsschritt das Abwarten einer vorbestimmten Pausenzeit umfasst. Durch das Abwarten einer Pausenzeit, bevorzugt als erster Nachbehandlungsschritt nach dem schichtweisen selektiven Verfestigen, kann beispielsweise das hergestellte dreidimensionale Objekt auf eine Temperatur abgekühlt werden, von der ausgehend im Zuge des nachfolgenden Behandelns mit einer Flüssigkeit derart abgekühlt werden kann, dass es im dreidimensionalen Objekt nicht zur Ausbildung von Rissen und/oder Verformungen kommt.

Vorzugsweise erfolgt das Nachbehandeln in mindestens zwei nacheinander durchgeführten Nachbehandlungsschritten, so dass zumindest ein Teil des unverfestigten Aufbaumaterials nach dem ersten der Nachbehandlungsschritte eine Temperatur hat, die unterhalb der Glasübergangstemperatur eines Polymers, das im Aufbaumaterial enthalten ist, liegt. Auf diese Weise können beispielsweise Alterungseffekte des unverfestigten Aufbaumaterials minimiert oder völlig vermieden werden. Eine in einem nachfolgenden Behandlungsschritt verwendete Flüssigkeit kann sich beispielsweise hinsichtlich ihrer Zusammensetzung und/oder ihrer Temperatur von der im ersten Nachbehandlungsschritt verwendeten Flüssigkeit unterscheiden.

Vorzugsweise enthält das Aufbaumaterial, das zum Herstellen des dreidimensionalen Objekts verwendet wird, zumindest einen Anteil Altpulver, das zuvor beim Herstellen eines dreidimensionalen Objekts als unverfestigtes Aufbaumaterial übrig geblieben ist. Dabei beträgt der Anteil Altpulver bevorzugt mindestens 20 Gewichtsprozent, mehr bevorzugt mindestens 40 Gewichtsprozent, noch mehr bevorzugt mindestens 60 Gewichtsprozent, insbesondere bevorzugt mindestens 80 Gewichtsprozent. Durch die Verwendung von Altpulver lässt sich beispielsweise der Verbrauch an Aufbaumaterial in ökonomisch und ökologisch sinnvoller Weise reduzieren.

Vorzugsweise wird die Flüssigkeit nach dem Nachbehandeln zumindest teilweise regeneriert, insbesondere durch Sedimentieren und/oder Filtrieren von unverfestigtem Aufbaumaterial gereinigt. Dadurch kann beispielsweise der Verbrauch an Trägerflüssigkeit und/oder der Verbrauch an der mindestens einen weiteren Substanz in ökonomisch und ökologisch vorteilhafter Weise verringert werden.

**Das erfindungsgemäße** Nachbehandlungssystem zum Nachbehandeln eines unverfestigten Aufbaumaterials, in das ein durch selektives schichtweises Verfestigen eines pulverförmigen Aufbaumaterials hergestelltes dreidimensionales Objekt eingebettet ist, oder des dreidimensionalen Objekts und des unverfestigten Aufbaumaterials, in das das hergestellte dreidimensionale Objekt eingebettet ist, umfasst eine Nachbehandlungsvorrichtung, in der das unverfestigte Aufbaumaterial bzw. das hergestellte dreidimensionale Objekt und das unverfestigte Aufbaumaterial im Betrieb mit einer Flüssigkeit behandelt werden, eine Bereitstellungsanordnung zur Bereitstellung der Flüssigkeit dergestalt, dass sie eine flüssige Trägersubstanz und mindestens eine weitere Substanz, die die Oberflächenspannung der Trägersubstanz herabsetzt, enthält, und eine Trocknungsvorrichtung zum Trocknen zumindest eines Teils des mit der Flüssigkeit behandelten unverfestigten Aufbaumaterials bzw. des mit der Flüssigkeit behandelten dreidimensionalen Objekts und des mit der Flüssigkeit behandelten unverfestigten Aufbaumaterials.

Die entsprechende Nachbehandlungsvorrichtung umfasst bevorzugt einen Nachbehandlungsbehälter zum Aufnehmen des dreidimensionalen Objekts und/oder des unverfestigten Aufbaumaterials und zum Zuführen von Flüssigkeit, wobei der Nachbehandlungsbehälter bevorzugt für die Flüssigkeit zumindest temporär durchlässig ist, weiter bevorzugt im Bereich seines Bodens für die Flüssigkeit zumindest temporär durchlässige Bereiche aufweist. Mit einer derartigen Vorrichtung steht beispielsweise eine Vorrichtung zur Verfügung, mit der das erfindungsgemäße Verfahren ausgeführt werden kann.

Die entsprechende Bereitstellungsanordnung zur Bereitstellung der Flüssigkeit kann eine Mischvorrichtung umfassen (beispielsweise eine Mischbatterie, in der die flüssige Trägersubstanz und die mindestens eine weitere Substanz aus zwei getrennten Leitungen in eine gemeinsame Weiterleitung geführt werden und sich in der Weiterleitung vermischen und/oder einen Misch-Zwischenbehälter, in dem die flüssige Trägersubstanz und die mindestens eine weitere Substanz zwecks Durchmischung eingebracht und dort vermischt werden) oder kann einen einzelnen Behälter (etwa einen Tank) umfassen, in dem die flüssige Trägersubstanz und die mindestens eine weitere Substanz bereits in einem durchmischten Zustand vorliegen und somit jederzeit direkt bereitgestellt werden können. Weiter umfasst die Bereitstellungsanordnung bevorzugt eine Zuleitung für die Flüssigkeit in die Nachbehandlungsvorrichtung.

Mithilfe des erfindungsgemäßen Nachbehandlungssystems ist das erfindungsgemäße Verfahren unkompliziert und kontrolliert durchführbar, wobei im Prinzip sowohl eine fertige Flüssigkeitsmischung (also die Flüssigkeit im Sinne der Erfindung - auch im Folgenden) als auch eine durch das Nachbehandlungssystem selbst hergestellte Flüssigkeitsmischung bereitgestellt werden kann.

Die Oberflächenspannung einer Flüssigkeit wird gemäß DIN 55660 gemessen. Typische Werte für die Oberflächenspannung verschiedener Flüssigkeiten bei einer Temperatur von 20°C sind in Tabelle 1 angegeben.

**Tabelle 1**

| Stoff | Oberflächenspannung (N/m) |
|---|---|
| Wasser | 0,0728 |
| Benzol | 0,0289 |
| Glycerin | 0,0634 |
| Glykol | 0,0477 |
| Methanol | 0,0226 |
| Ethanol | 0,02255 |
| Aceton | 0,02330 |
| Benzol | 0,0289 |
| Ethylenglycol | 0,0484 |
| n-Pentan | 0,0160 |
| n-Hexan | 0,0184 |
| H₂SO₄(98,5%) | 0,0551 |

Unter einer flüchtigen, d.h. rasch verdunstenden, Substanz wird im Rahmen der Erfindung eine Substanz mit einer niedrigen Verdunstungszahl VD, insbesondere mit einer VD < 80, verstanden. Die Verdunstungszahl wird dabei gemäß DIN 53170 gemessen.

Eine erste Substanz ist flüchtiger als eine zweite Substanz, wenn die erste Substanz eine geringere Verdunstungszahl als die zweite Substanz aufweist.

Mit dem Begriffen "Substanz" und "Trägersubstanz" kann jeweils sowohl ein Reinstoff, beispielsweise eine chemische Verbindung, als auch ein Stoffgemisch, beispielsweise eine Lösung, bezeichnet werden.

Merkmale und Zweckmäßigkeiten der Erfindung ergeben sich aus der Beschreibung von Ausführungsbeispielen unter Bezugnahme auf die beigefügten Zeichnungen.
- Fig. 1: ist eine schematische, teilweise im Schnitt dargestellte Ansicht einer Vorrichtung zum Herstellen eines dreidimensionalen Objekts durch schichtweises selektives Verfestigen eines pulverförmigen Aufbaumaterials.
- Fig. 2: ist eine schematische, im Schnitt dargestellte Ansicht einer Nachbehandlungsvorrichtung für ein Nachbehandlungssystem gemäß einem Ausführungsbeispiel vorliegender Erfindung.
- Fig. 3: ist ein schematisches Ablauf-Blockdiagramm eines Ausführungsbeispiels des erfindungsgemäßen Verfahrens im Gesamtrahmen der Herstellung eines dreidimensionalen Objekts.

Im Folgenden werden mit Bezug auf die Zeichnungen mehrere Ausführungsbeispiele vorliegender Erfindung beschrieben.

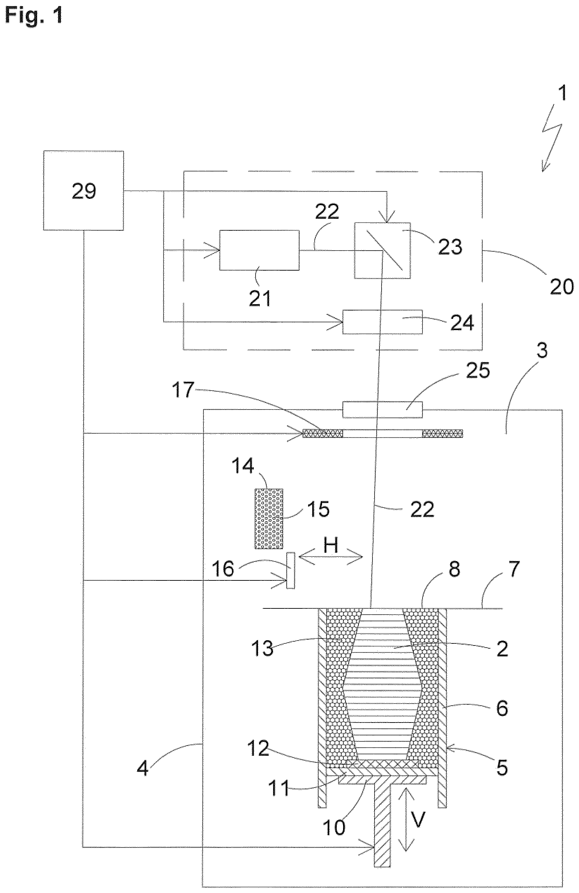

Die in Fig. 1 dargestellte Vorrichtung nach einem Ausführungsbeispiel ist eine Lasersinter- oder Laserschmelzvorrichtung 1. Zum Herstellen eines Objekts 2 enthält sie eine Prozesskammer 3 mit einer Kammerwandung 4.

In der Prozesskammer 3 ist ein nach oben offener Baubehälter 5 mit einer Baubehälterwandung 6 angeordnet. Durch die obere Öffnung des Baubehälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Baubehälter 5 ist ein in einer vertikalen Richtung V bewegbarer Träger 10 angeordnet, an dem eine Grundplatte 11 angebracht ist, die den Baubehälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Aufbaumaterial und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selbst aufgebaut werden, die dann als Bauunterlage dient. In Fig. 1 ist das in dem Baubehälter 5 auf der Bauplattform 12 zu bildende Objekt 2 unterhalb der Arbeitsebene 7 in einem Zwischenzustand mit mehreren verfestigten Schichten umgeben vom unverfestigtem Aufbaumaterial 13 dargestellt.

Der Baubehälter 5 kann als Wechselbehälter ausgebildet sein, welcher aus der Vorrichtung 1 zum Herstellen eines dreidimensionalen Objekts entnehmbar ist und in einer weiter unter näher zu beschreibenden Nachbehandlungsvorrichtung als Nachbehandlungsbehälter verwendbar ist.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 innerhalb des Baufelds 8. Vorzugsweise erstreckt sich der Beschichter 16 quer zu seiner Bewegungsrichtung über den gesamten zu beschichtenden Bereich.

Optional ist in der Prozesskammer 3 eine Strahlungsheizung 17 angeordnet, die zum Beheizen des aufgebrachten Aufbaumaterials 15 dient. Als Strahlungsheizung 17 kann beispielsweise ein Infrarotstrahler vorgesehen sein.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Weiter enthält die Lasersintervorrichtung 1 eine Steuereinheit 29, über die die einzelnen Bestandteile der Vorrichtung 1 in koordinierter Weise zum Durchführen des Verfahrens zum Herstellen eines dreidimensionalen Objekts 2 gesteuert werden. Alternativ kann die Steuereinheit 29 auch teilweise oder ganz außerhalb der Vorrichtung 1 angebracht sein. Die Steuereinheit 29 kann eine CPU enthalten, deren Betrieb durch ein Computerprogramm (Software) gesteuert wird. Das Computerprogramm kann getrennt von der Vorrichtung 1 auf einem Speichermedium gespeichert sein, von dem aus es in die Vorrichtung 1, insbesondere in die Steuereinheit 29, geladen werden kann.

Im Betrieb wird zum Aufbringen einer Schicht des pulverförmigen Aufbaumaterials (Pulverschicht) zunächst der Träger 10 um eine Höhe abgesenkt, die der gewünschten Schichtdicke entspricht. Der Beschichter 16 fährt zu dem Vorratsbehälter 14 und nimmt aus ihm eine zum Aufbringen mindestens einer Schicht ausreichende Menge des Aufbaumaterials 15 auf. Dann fährt er über das Baufeld 8 und bringt dort eine dünne Schicht des pulverförmigen Aufbaumaterials 15 auf die Bauunterlage oder eine bereits vorher vorhandene Pulverschicht auf. Das Aufbringen erfolgt zumindest über den gesamten Querschnitt des herzustellenden Objekts 2, vorzugsweise über das gesamte Baufeld 8, also den durch die Baubehälterwandung 6 begrenzten Bereich der Arbeitsebene 7. Optional wird das pulverförmige Aufbaumaterial 15 mittels einer Strahlungsheizung 17 auf eine Arbeitstemperatur aufgeheizt.

Anschließend wird der Querschnitt des herzustellenden Objekts 2 von dem Laserstrahl 22 abgetastet, so dass das pulverförmige Aufbaumaterial 15 an den Stellen verfestigt wird, die dem Querschnitt des herzustellenden Objekts 2 entsprechen. Dabei werden Pulverpartikel an diesen Stellen durch die Energie, die durch die Strahlung eingebracht wird, teilweise oder vollständig aufgeschmolzen, so dass sie nach einer Abkühlung miteinander verbunden als Festkörper vorliegen.

Diese Schritte werden so lange wiederholt, bis das Objekt 2 fertiggestellt ist.

Im Anschluss werden das hergestellte dreidimensionale Objekt 2 und/oder das unverfestigte Aufbaumaterial 13, in das das dreidimensionale Objekt eingebettet ist, nachbehandelt. Das Nachbehandeln findet dabei bevorzugt außerhalb der Prozesskammer 3 statt. Dadurch kann die Prozesskammer während des Nachbehandelns für das Herstellen eines weiteren dreidimensionalen Objekts zur Verfügung stehen.

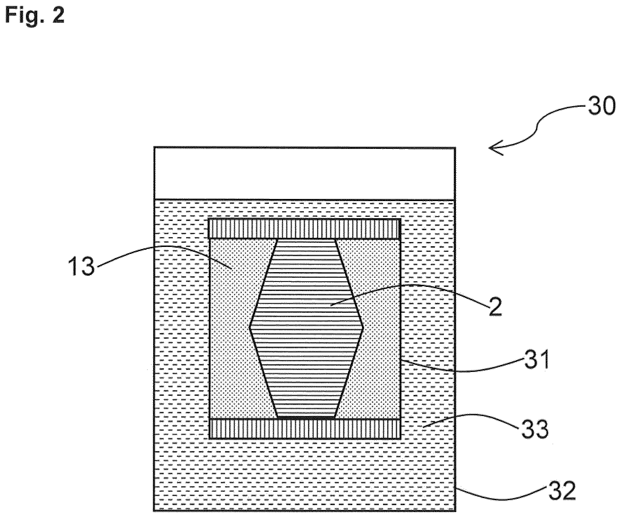

In Fig. 2 ist eine Nachbehandlungsvorrichtung 30 als Bestandteil eines Nachbehandlungssystems gemäß einem Ausführungsbeispiel vorliegender Erfindung schematisch dargestellt. Andere Komponenten des erfindungsgemäßen Nachbehandlungssystems sind in der Fig. 2 aus Übersichtlichkeitsgründen nicht dargestellt - hierzu wird auf die vorhergehende Beschreibung mit entsprechenden Beispielen verwiesen. Die Nachbehandlungsvorrichtung 30 umfasst einen Nachbehandlungsbehälter 31, welcher bestimmt ist, das dreidimensionale Objekt 2 und das unverfestigte Aufbaumaterial 13, in das das dreidimensionale Objekt 2 eingebettet ist, in seinem Inneren aufzunehmen.

Die Nachbehandlungsvorrichtung 30 weist ferner einen nach oben offenen, mit einer Flüssigkeit 33 befüllbaren Flüssigkeitsbehälter 32 auf, der so ausgebildet ist, dass er den Nachbehandlungsbehälter 31 zumindest teilweise in seinem Inneren aufnehmen kann, so dass der Nachbehandlungsbehälter 31 zumindest teilweise in die Flüssigkeit 33, mit der der Flüssigkeitsbehälter 32 befüllt ist, eingetaucht werden kann.

In einem Ausführungsbeispiel ist der Nachbehandlungsbehälter 31 der Baubehälter 5, der als Wechselbehälter der Lasersintervorrichtung 1 entnehmbar ist und in den Flüssigkeitsbehälter 32 eintauchbar ist. Gegebenenfalls kann der Baubehälter 5 mit einem flüssigkeitdurchlässigen Deckel versehen sein.

Alternativ kann der Nachbehandlungsbehälter 31 einen zumindest teilweise fluiddurchlässigen (d.h. für ein Fluid, also ein Gas und/oder eine Flüssigkeit, durchlässig) Boden und/oder einen zumindest teilweise fluiddurchlässigen Deckel aufweisen. Alternativ oder zusätzlich kann der Nachbehandlungsbehälter 31 im Bereich seiner Seitenwand zumindest teilweise fluiddurchlässig ausgeführt sein.

In dem in Fig. 2 dargestellten Betriebszustand befindet sich der Nachbehandlungsbehälter 31 im Inneren des Flüssigkeitsbehälters 32. Dabei taucht der Nachbehandlungsbehälter 31 in die Flüssigkeit 33 ein. Ein Teil der Flüssigkeit 33 befindet sich im Inneren des Nachbehandlungsbehälters 31.

In einem Ausführungsbeispiel des Verfahrens zum Nachbehandeln werden das dreidimensionale Objekt 2 und das das dreidimensionale Objekt 2 umgebende unverfestigte Aufbaumaterial 13 in der Nachbehandlungsvorrichtung 30 gemäß dem in Fig. 2 schematisch dargestellten und weiter oben beschriebenen Ausführungsbeispiel nachbehandelt. Dazu wird der Nachbehandlungsbehälter 31 in die Flüssigkeit 33, die sich im Flüssigkeitsbehälter 32 befindet, eingetaucht.

Beim Eintauchen des Nachbehandlungsbehälters 31 in die Flüssigkeit 33 dringt Flüssigkeit 33 in das Innere des Nachbehandlungsbehälters 31 und tritt dort mit dem dreidimensionalen Objekt 2 und/oder dem unverfestigten Aufbaumaterial 13 in Kontakt, d.h. das dreidimensionale Objekt 2 und/oder das unverfestigte Aufbaumaterial 13 werden mit der Flüssigkeit 33 behandelt. Dabei ist es bevorzugt, dass die Flüssigkeit 33 das von dem unverfestigten Aufbaumaterial 13 gebildete Pulverbett vollständig durchdringt, so dass alle Bereiche des Pulverbetts mit der Flüssigkeit 33 in Kontakt treten und keine trockenen Bereiche verbleiben. Es ist ferner bevorzugt, dass die Flüssigkeit 33 das unverfestigte Aufbaumaterial im Wesentlichen vollständig benetzt.

Beim Eintauchen des Nachbehandlungsbehälters 31 in die Flüssigkeit 33 kann eine Kraft auf den Nachbehandlungsbehälter 31 ausgeübt werden, die der Auftriebskraft der Flüssigkeit 33 entgegengerichtet ist.

Die Flüssigkeit, die zum Behandeln des dreidimensionalen Objekts 2 und/oder von unverfestigtem Aufbaumaterial 13 verwendet wird, enthält eine flüssig e Trägersubstanz und mindestens eine weitere Substanz, die die Oberflächenspannung der Trägersubstanz herabsetzt.

Die Auswahl der Trägersubstanz und der mindestens einen weiteren Substanz erfolgt unter anderem im Hinblick auf die Kompatibilität dieser Substanzen miteinander und mit dem pulverförmigen Aufbaumaterial. Bevorzugt sind die Trägersubstanz und die weitere Substanz derart aufeinander abgestimmt, dass nach einem Trocknen des dreidimensionalen Objekts 2 und/oder des unverfestigten Aufbaumaterials 13 keine Rückstände auf dem dreidimensionalen Objekt 2 und/oder dem unverfestigten Aufbaumaterial verbleiben, die zu einer im Hinblick auf die weitere Verwendung inkompatiblen Materialkombination und/oder Verunreinigung führen. Als weitere Substanz wird insbesondere eine Substanz verwendet, die bei der Herstellung des pulverförmigen Aufbaumaterials Anwendung gefunden hat. Beispielsweise erfolgt die Herstellung von pulverförmigem PA12 unter Einsatz von Ethanol. So hat sich im Falle eines pulverförmigen Aufbaumaterials, das PA12 enthält, die Wahl von Ethanol als weitere Substanz als geeignet erwiesen, insbesondere wenn Wasser als Trägersubstanz verwendet wird.

Die Wahl der Konzentration der weiteren Substanz in der Flüssigkeit erfolgt unter anderem im Hinblick darauf, dass die Oberflächenspannung der Trägersubstanz so herabgesetzt wird, dass die Benetzung des unverfestigten und/oder des verfestigten Aufbaumaterials verbessert wird. Als geeignet erwiesen hat sich beispielsweise eine Konzentration von mindestens 0,1 Gewichtsprozent, bevorzugt mindestens 0,5 Gewichtsprozent, mehr bevorzugt mindestens 1 Gewichtsprozent, noch mehr bevorzugt mindestens 2,5 Gewichtsprozent, am meisten bevorzugt mindestens 5 Gewichtsprozent. Als geeignet erwiesen hat sich beispielsweise ferner eine Konzentration von höchstens 45 Gewichtsprozent, bevorzugt höchstens 35 Gewichtsprozent, mehr bevorzugt höchstens 25 Gewichtsprozent, noch mehr bevorzugt höchstens 15 Gewichtsprozent, am meisten bevorzugt höchstens 10 Gewichtsprozent.

Als geeignete Konzentration der Trägersubstanz in der Flüssigkeit hat sich beispielsweise eine Konzentration von mindestens 65 Gewichtsprozent, bevorzugt mindestens 75 Gewichtsprozent, mehr bevorzugt mindestens 85 Gewichtsprozent, insbesondere bevorzugt mindestens 90 Gewichtsprozent erwiesen. Als geeignete Konzentration der Trägersubstanz in der Flüssigkeit hat sich beispielsweise ferner eine Konzentration von höchstens 99,5 Gewichtsprozent, bevorzugt höchstens 99 Gewichtsprozent, mehr bevorzugt höchstens 97,5 Gewichtsprozent, insbesondere bevorzugt höchstens 95 Gewichtsprozent erwiesen.

Die Flüssigkeit, mit der das dreidimensionale Objekt 2 und/oder das unverfestigte Aufbaumaterial 13 behandelt werden, kann neben der Trägersubstanz auch mehrere weitere Substanzen enthalten.

In einem Ausführungsbeispiel des Verfahrens zum Nachbehandeln wird Wasser als Trägersubstanz verwendet. Um Verunreinigungen des dreidimensionalen Objekts 2 und/oder des unverfestigten Aufbaumaterials 13 durch in Quell- oder Leitungswasser neben H₂O enthaltene Stoffe (beispielsweise Kalk) zu vermeiden, kann gereinigtes Wasser verwendet werden. Bei gereinigtem Wasser kann es sich beispielsweise um destilliertes oder deionisiertes oder demineralisiertes Wasser oder Reinstwasser handeln.

Die Flüssigkeit, mit der das hergestellte dreidimensionale Objekt 2 und/oder das unverfestigte Aufbaumaterial 13 behandelt werden, enthält in diesem Ausführungsbeispiel Ethanol als weitere Substanz. Der Zusatz von Ethanol verringert die Oberflächenspannung der Trägersubstanz Wasser. Dadurch wird die Benetzung des unverfestigten und/oder verfestigten Aufbaumaterials mit der Trägersubstanz verbessert.

In einem konkreten Beispiel beträgt die Ethanolkonzentration der als Flüssigkeit 33 zum Nachbehandeln eines dreidimensionalen Objekts 2 und unverfestigten Aufbaumaterials 13 verwendeten wässrigen Ethanollösung 5 Gewichtsprozent. Zur Herstellung des dimensionalen Objekts 2 wurde dabei ein PA12 enthaltendes pulverförmiges Aufbaumaterial 15, wobei bei der Herstellung des PA12 insbesondere Ethanol zur Anwendung gekommen war, verwendet. Die Flüssigkeit 33 penetriert das unverfestigte Aufbaumaterial 13 selbst dann, wenn dieses ein stark komprimiertes Pulverbett bildet.

Alternativ oder zusätzlich zu Ethanol kann die Flüssigkeit auch mindestens einen von Ethanol verschiedenen Stoff, der die Oberflächenspannung der Trägersubstanz herabsetzt, als weitere Substanz enthalten. Es kann sich bei dem mindestens einen von Ethanol verschiedenen Stoff beispielsweise um eine organische Verbindung handeln, beispielsweise eine Verbindung, die aus der aus folgenden Verbindungen bestehenden Gruppe ausgewählt ist: acyclische und cyclische aliphatische Kohlenwasserstoffe, wobei es sich jeweils um Alkane, Alkene und Alkine handeln kann, aromatische Kohlenwasserstoffe, Halogenkohlenwasserstoffe, Alkohole (insbesondere acyclische Alkohole wie Methanol, n-Propanol, iso-Propanol, n-Butanol, iso-Butanol, sec-Butanol, tert-Butanol), Ketone, Aldehyde, Carbonsäuren, Ether sowie Ester ausgewählt ist. Bei dem von Ethanol verschiedenen Stoff kann es sich auch um ein Tensid, beispielsweise Natriumdodecylsulfat, handeln. Die Verwendung flüchtiger Verbindungen, insbesondere flüchtiger organischer Verbindungen, hat sich als vorteilhaft erwiesen, da sich diese durch Verdampfen auf einfache Weise und rückstandsfrei vom dreidimensionalen Objekt 2 bzw. dem unverfestigten Aufbaumaterial 13 wieder entfernen lassen.

In einem Ausführungsbeispiel des Verfahrens zum Nachbehandeln Ausführungsbeispiel weist die Flüssigkeit 33 vor dem Nachbehandeln eine Temperatur auf, die geringer als die Temperatur des hergestellten dreidimensionalen Objekts 2 ist, damit das dreidimensionale Objekt 2 beim Nachbehandeln abgekühlt wird. Beispielsweise werden das dreidimensionale Objekt 2 und/oder das unverfestigte Aufbaumaterial auf eine Temperatur abgekühlt, die im Wesentlichen der Raumtemperatur entspricht. Um das Auftreten von Alterungseffekten im unverfestigten Aufbaumaterial 13 zu verringern, kann zumindest ein Teil des unverfestigten Aufbaumaterials 13 beim Nachbehandeln auf eine Temperatur, die unterhalb der Glasübergangstemperatur eines im Aufbaumaterial enthaltenen Polymers liegt, abgekühlt werden. Um im Zuge des Abkühlens auftretende Verformungen des dreidimensionalen Objekts 2 zu minimieren oder zu verhindern, kann das gesamte dreidimensionale Objekt, also auch dessen Inneres, auf eine Temperatur unterhalb der Glasübergangstemperatur eines im Aufbaumaterial enthaltenen Polymers abgekühlt werden.

In einem Ausführungsbeispiel des Verfahrens zum Nachbehandeln erfolgt die Behandlung des dreidimensionalen Objekts 2 und/oder des unverfestigten Aufbaumaterials 13 mit einer Flüssigkeit 33 dadurch, dass das dreidimensionale Objekt 2 und/oder das unverfestigte Aufbaumaterial 13 gemeinsam mit der Flüssigkeit 33 in einen beispielsweise als Trommel ausgeführten Nachbehandlungsbehälter eingebracht werden und der Nachbehandlungsbehälter eine Rotationsbewegung ausführt, um einen innigen Kontakt zwischen der Flüssigkeit und dem dreidimensionalen Objekt 2 bzw. dem unverfestigten Aufbaumaterial herzustellen.

In einem weiteren Ausführungsbeispiel wird die Flüssigkeit in Form eines oder mehrerer auf das dreidimensionale Objekt 2 und/oder das unverfestigte Aufbaumaterial 13 gerichteter Strahlen mit dem dreidimensionalen Objekt 2 und/oder dem unverfestigten Aufbaumaterial 13 in Kontakt gebracht, um das dreidimensionale Objekt bzw. das unverfestigte Aufbaumaterial 13 zu behandeln.

In einem weiteren Ausführungsbeispiel wird ein Behälter, in dessen Inneren sich das dreidimensionale Objekt 2 und/oder das unverfestigte Aufbaumaterial 13 befinden, durch Einleiten der Flüssigkeit zumindest teilweise mit der Flüssigkeit befüllt, um das dreidimensionale Objekt 2 bzw. das unverfestigte Aufbaumaterial 13 zu behandeln.

In einem weiteren Ausführungsbeispiel wird die Flüssigkeit durch einen Behälter, in dessen Inneren sich das dreidimensionale Objekt und/oder das unverfestigte Aufbaumaterial 13 befinden, transportiert. Die Flüssigkeit kann dabei beispielsweise mittels einer Pumpe im Kreislauf geführt werden, wobei es möglich ist, dass in dem Kreislauf eine Station zum Aufbereiten und/oder Reinigen der Flüssigkeit angeordnet ist.

In einem weiteren Ausführungsbeispiel erfolgt das Nachbehandeln in mindestens zwei nacheinander durchgeführten Nachbehandlungsschritten, wobei mindestens ein Nachbehandlungsschritt mit Hilfe einer weiteren Flüssigkeit erfolgt. Bei der weiteren Flüssigkeit kann es sich beispielsweise um eine Mischung mehrerer Stoffe, insbesondere eine Lösung, oder einen Reinstoff, beispielsweise Wasser, handeln. Die in verschiedenen Nachbehandlungsschritten verwendeten Flüssigkeiten können sich beispielsweise hinsichtlich ihrer Zusammensetzung und/oder ihrer Temperatur voneinander unterscheiden. So ist es möglich, dass das dreidimensionale Objekt 2 und/oder das unverfestigte Aufbaumaterial 13 in einem der Nachbehandlungsschritte mit einer Flüssigkeit behandelt werden, die eine andere Konzentration der weiteren Substanz aufweist als die in einem vorhergehenden Nachbehandlungsschritt verwendete Flüssigkeit. Um beispielsweise das Trocknen durch Verdampfen zu beschleunigen, können das dreidimensionale Objekt und/oder das unverfestigte Aufbaumaterial in einem zweiten Nachbehandlungsschritt mit einer Flüssigkeit behandelt werden, die flüchtiger ist und/oder einen höheren Gehalt der flüchtigeren Komponente aufweist als die im ersten Nachbehandlungsschritt verwendete Flüssigkeit.

In einem weiteren Ausführungsbeispiel erfolgt das Nachbehandeln in mindestens zwei nacheinander durchgeführten Nachbehandlungsschritten, wobei mindestens ein Nachbehandlungsschritt das Abwarten einer vorbestimmten Pausenzeit umfasst. Dadurch ist es beispielsweise möglich, dass das hergestellte dreidimensionale Objekt in einem ersten Nachbehandlungsschritt auf eine Temperatur abgekühlt wird, von der ausgehend im Zuge eines nachfolgenden Nachbehandlungsschritts mit einer Flüssigkeit derart abgekühlt wird, dass es im dreidimensionalen Objekt nicht zur Ausbildung von Rissen und/oder Verformungen kommt.

In einem weiteren Ausführungsbeispiel erfolgt das Nachbehandeln in mindestens zwei nacheinander durchgeführten Nachbehandlungsschritten, so dass zumindest ein Teil des unverfestigten Aufbaumaterials nach dem ersten der Nachbehandlungsschritte eine Temperatur hat, die unterhalb der Glasübergangstemperatur eines Polymers, das im Aufbaumaterial enthalten ist, liegt. Auf diese Weise können beispielsweise Alterungseffekte des unverfestigten Aufbaumaterials minimiert oder völlig vermieden werden.

Um das hergestellte dreidimensionale Objekt 2 und unverfestigtes Aufbaumaterial 13, das durch das Behandeln mit der Flüssigkeit aufgeschlämmt ist, voneinander zu trennen, können mechanische Kräfte eingesetzt werden. Insbesondere erfolgt das Trennen nach und/oder in Kombination mit dem Behandeln mit der Flüssigkeit 33.

In einem weiteren Ausführungsbeispiel des Verfahrens zum Nachbehandeln werden ein oder mehrere Strahlen der Flüssigkeit genutzt, um unverfestigtes Aufbaumaterial 13 vom dreidimensionalen Objekt 2 zu entfernen, insbesondere unverfestigtes Aufbaumaterial 13 aus Kanälen und/oder Hohlräumen des dreidimensionalen Objekts 2 heraus zu spülen.

Alternativ oder zusätzlich können das dreidimensionale Objekt und/oder das unverfestigte Aufbaumaterial und/oder die Flüssigkeit 33 in Bewegung versetzt werden, um das Trennen zu erleichtern. Bei der Bewegung kann es sich beispielsweise um eine Rüttelbewegung und/oder eine Schüttelbewegung und/oder eine Schwenkbewegung und/oder eine Rührbewegung handeln.

Die Nachbehandlungsvorrichtung 30 kann beispielsweise eine Rüttelplatte, auf der der Nachbehandlungsbehälter angeordnet ist, zum Erzeugen einer Rüttelbewegung enthalten.

Alternativ oder zusätzlich kann die Nachbehandlungsvorrichtung 30 einen Greifer enthalten, der den Nachbehandlungsbehälter und/oder das dreidimensionale Objekt 2 ergreift und in Bewegung versetzt, beispielsweise hin und her schwenkt.

Alternativ oder zusätzlich kann die Nachbehandlungsvorrichtung 30 ein Rührgerät zum Erzeugen einer Rührbewegung enthalten. Als Rührgerät kann beispielsweise ein Magnetrührer verwendet werden.

In einem weiteren Ausführungsbeispiel des Verfahrens zum Nachbehandeln werden das dreidimensionale Objekt 2 und/oder das unverfestigte Aufbaumaterial 13 mit Druckwellen, bevorzugt mit akustischen Wellen bzw. Schallwellen, insbesondere mit Ultraschall und/oder Infraschall behandelt, um das Trennen des unverfestigten Aufbaumaterials 13 vom dreidimensionalen Objekt 2 zu erleichtern.

Die Nachbehandlungsvorrichtung kann zum Erzeugen von Ultraschall beispielsweise einen oder mehrere Ultraschallwandler enthalten. Der Ultraschallwandler kann beispielsweise an der Wandung des Nachbehandlungsbehälters angebracht sein. Es ist alternativ oder zusätzlich auch möglich, den Nachbehandlungsbehälter zumindest teilweise in ein Ultraschallbad, welches über einen Ultraschallwandler verfügt, einzutauchen.

Alternativ oder zusätzlich kann die Nachbehandlungsvorrichtung einen oder mehrere Infraschallgeneratoren zum Erzeugen von Infraschall enthalten.

Nach dem Behandeln des dreidimensionalen Objekts 2 und/oder des unverfestigten Aufbaumaterials 13 wird ein Trocknen des dreidimensionalen Objekts 2 und/oder des unverfestigten Aufbaumaterials 13 vorgenommen.

Das Trocknen kann dabei beispielsweise durch Verdampfen der Flüssigkeit erfolgen. Um das Trocknen zu beschleunigen, kann das Trocknen bei erhöhter Temperatur und/oder verringertem Druck durchgeführt werden. Beispielsweise kann das Verdampfen in einem Kondenstrockner, einem Vakuum- bzw. Unterdrucktrockner oder einem Rotationsverdampfer durchgeführt werden. Um das Trocknen des unverfestigten Aufbaumaterials zu beschleunigen, kann dieses zudem verteilt bzw. ausgebreitet werden, so dass eine größere zugängliche Oberfläche zur Verfügung steht, wodurch die Flüssigkeit schneller verdampfen kann. Das Trocknen der dreidimensionalen Objekte kann gepackt oder gestapelt erfolgen. Um die Trocknung der Bauteile zu beschleunigen, können sie vereinzelt oder separiert gelagert werden, d.h möglichst unverstellt von Luft bzw. Gas umspült werden, sodass eine möglichst geringe Fläche in Kontakt zu anderen Flächen steht, z.B. Auflageflächen oder Halteflächen einer Haltevorrichtung.

Das Trocknen kann auch mit Hilfe eines Gasstroms, welcher das dreidimensionale Objekt 2 und/oder das unverfestigte Aufbaumaterial 13 anströmt oder durchströmt, erfolgen. Der Gasstrom wird dabei bevorzugt aus einem Schutz- bzw. Inertgas, insbesondere Stickstoff, oder Luft, insbesondere trockener Luft, gebildet. Der Gasstrom wird dabei bevorzugt aus einem erwärmten Gas gebildet, dessen Temperatur insbesondere höher gewählt ist als die aktuelle Temperatur des Objekts 2 bzw. des unverfestigten Aufbaumaterials 13 und/oder niedriger als die Temperatur, die zu Alterungserscheinungen im Objekt 2 bzw. dem unverfestigten Aufbaumaterial 13 führen würde. Als Alterungserscheinungen werden hierbei wärmeinduzierte Effekte des Aufbaumaterials im oder außerhalb des Objekts verstanden, die im Wesentlichen erst jenseits einer materialabhängigen Grenztemperatur auftreten. Mit anderen Worten, die Temperatur des erwärmten Gases sollte bevorzugt unterhalb dieser materialabhängigen Grenztemperatur liegen.

Zum Heizen des dreidimensionalen Objekts 2 und/oder des unverfestigten Aufbaumaterials können beispielsweise Konvektionsheizungen (etwa ein Umluftofen), Strahlungsheizungen (etwa ein IR-Strahler), Kontaktheizungen (etwa eine Wärmeplatte) oder andere Heizungen verwendet werden.

Wenn das Trocknen bei erhöhter Temperatur erfolgt, wird also die Temperatur insbesondere so gewählt, dass im dreidimensionalen Objekt 2 und/oder dem unverfestigten Aufbaumaterial 13 im Wesentlichen keine Abbaueffekte infolge der erhöhten Temperatur auftreten. Bei Verwendung eines Aufbaumaterials 15, das PA12 enthält, hat sich eine im Vergleich zur Raumtemperatur erhöhte Temperatur, die 80 °C nicht überschreitet, als geeignet erwiesen.

Das Trocknen, insbesondere das Trocknen des unverfestigten Aufbaumaterials 13, mittels einer Zentrifuge ist ebenfalls möglich. Auch das Zentrifugieren wird daher im Rahmen der Erfindung als Trocknung verstanden.

Die genannten Methoden zum Trocknen können, soweit möglich, beliebig miteinander kombiniert werden.

Um die Flüssigkeit bzw. die Trägersubstanz und/oder die mindestens eine weitere Substanz zumindest teilweise wiederzugewinnen, kann die vom dreidimensionalen Objekt 2 bzw. dem unverfestigten Aufbaumaterial 13 abgetrennte Flüssigkeit, eventuell nach Kondensation von durch Verdampfen der Flüssigkeit entstandenen Dämpfen, gesammelt werden.

Vor der Wiederverwendung kann eine Regeneration und/oder eine Reinigung der wiedergewonnenen Flüssigkeit bzw. der wiedergewonnenen Trägersubstanz und/oder der wiedergewonnenen mindestens einen weiteren Substanz durchgeführt werden. Eine Reinigung der wiedergewonnenen Flüssigkeit kann beispielsweise durch Sieben, Zentrifugieren, Filtrieren, Abdampfen der flüchtigeren Komponente, Destillieren oder mittels eines Hydrozyklons erfolgen.

Die Merkmale der oben beschriebenen Ausführungsbeispiele können, soweit möglich, miteinander kombiniert und verändert werden.

Auch wenn weiter oben das Herstellen eines dreidimensionalen Objekts durch Lasersintern bzw. Laserschmelzen beschrieben wurde, ist die Erfindung nicht auf das Nachbehandeln eines durch Lasersintern oder Laserschmelzen hergestellten dreidimensionalen Objekts und unverfestigten Aufbaumaterials, in das ein derartiges dreidimensionales Objekt nach seiner Herstellung eingebettet ist, beschränkt. Die Erfindung kann auf das Nachbehandeln dreidimensionaler Objekte, die mittels beliebiger Verfahren zum generativen Herstellen hergestellt worden sind, bzw. entsprechende Aufbaumaterialien angewendet werden.

Die Belichtungsvorrichtung kann beispielsweise einen oder mehrere Gas- oder Festkörperlaser oder jede andere Art von Laser wie zum Beispiel Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichtungsvorrichtung jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den entsprechenden Stellen erhöht (Absorptionssintern) oder verringert (Inhibitationssintern), und dann unselektiv großflächig oder mit einem verfahrbaren Zeilenbelichter belichtet wird, kann die Erfindung angewendet werden.

Als pulverförmiges Aufbaumaterial können verschiedene Materialien verwendet werden, vorzugsweise Kunststoffpulver, Metallpulver, Keramikpulver, Sand, gefüllte oder gemischte Pulver. Das pulverförmige Aufbaumaterial kann beispielsweise mindestens eines der Polymere, das aus der aus folgenden Polymeren gebildeten Gruppe ausgewählt ist, enthalten: Polyetherimide, Polycarbonate, Polyphenylsulfone, Polyphenyloxide, Polyethersulfone, Acrylnitril-Butadien-StyrolCopolymerisate, Polyacrylate, Polyester, Polyamide, Polyaryletherketone, Polyether, Polyurethane, Polyimide, Polyamidimide, Polyolefine sowie Copolymere, welche mindestens zwei verschiedene Monomereinheiten der vorgenannten Polymere enthalten. Das pulverförmige Aufbaumaterial kann zusätzlich oder alternativ mindestens ein Polyblend auf der Basis von mindestens zwei der vorgenannten Polymere und Copolymere enthalten.

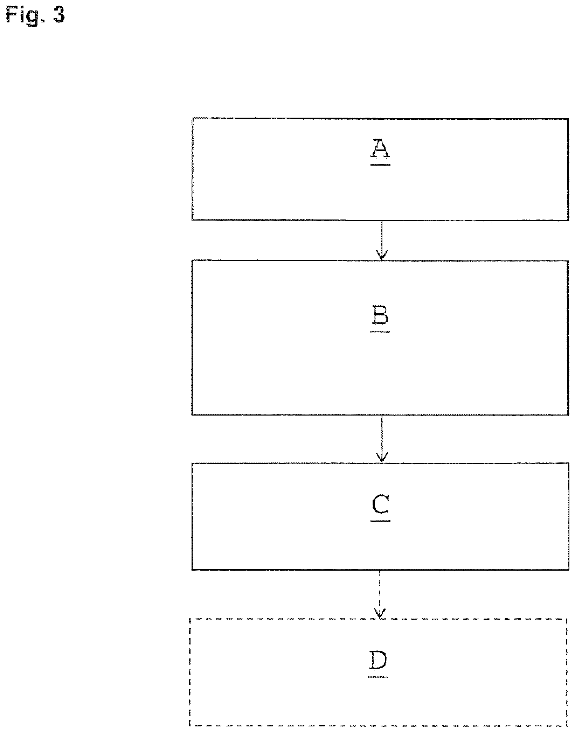

Fig. 3 zeigt schematisch den Ablauf eines erfindungsgemäßen Verfahrens. In einem ersten Schritt A (einem Vorschritt zum eigentlichen erfindungsgemäßen Verfahren) wird ein dreidimensionales Objekt 2 mittels selektiven schichtweisen Verfestigens eines pulverförmigen Aufbaumaterials 15 hergestellt. In einem zweiten Schritt B wird eine Flüssigkeit 33 bereitgestellt, die eine flüssige Trägersubstanz und mindestens eine weitere Substanz, die die Oberflächenspannung der Trägersubstanz herabsetzt, enthält. Mit dieser Flüssigkeit wird in einem Schritt C (dem erfindungsgemäßen Verfahren das dreidimensionale Objekt 2 bzw. das unverfestigte Aufbaumaterial 13 mit der Flüssigkeit nachbehandelt. In einem optionalen Schritt D wird das dreidimensionale Objekt 2 bzw. das unverfestigte Aufbaumaterial 13 getrocknet.

## Patentansprüche

1. Verfahren zum Nachbehandeln eines unverfestigten Aufbaumaterials (13), in das ein durch selektives schichtweises Verfestigen eines pulverförmigen Aufbaumaterials (15) hergestelltes dreidimensionales Objekt (2) eingebettet ist, oder des dreidimensionalen Objekts (2) und des unverfestigten Aufbaumaterials (13), in das das hergestellte dreidimensionale Objekt (2) eingebettet ist, umfassend die Schritte:
- Behandeln des unverfestigten Aufbaumaterials bzw. des hergestellten dreidimensionale Objekts (2) und des unverfestigten Aufbaumaterials (13) mit einer Flüssigkeit (33), und
- Trocknen zumindest eines Teils des mit der Flüssigkeit behandelten unverfestigten Aufbaumaterials bzw. des mit der Flüssigkeit behandelten dreidimensionalen Objekts und des mit der Flüssigkeit behandelten unverfestigten Aufbaumaterials,
wobei die Flüssigkeit (33) eine flüssige Trägersubstanz und mindestens eine weitere Substanz, die die Oberflächenspannung der Trägersubstanz herabsetzt, enthält.

2. Verfahren gemäß Anspruch 1,
wobei die weitere Substanz flüchtig, insbesondere flüchtiger als die Trägersubstanz, ist.

3. Verfahren gemäß einem der vorgenannten Ansprüche,
wobei die weitere Substanz ein Alkohol, bevorzugt ein acyclischer Alkohol, mehr bevorzugt ein acyclischer Alkohol mit einer Summenformel CₙH₂ₙ₊₂O mit n = 1, 2, 3 oder 4, noch mehr bevorzugt Ethanol ist.

4. Verfahren gemäß einem der vorgenannten Ansprüche,
wobei die Konzentration der weiteren Substanz in der Flüssigkeit mindestens 0,1 Gewichtsprozent, bevorzugt mindestens 0,5 Gewichtsprozent, mehr bevorzugt mindestens 1 Gewichtsprozent, noch mehr bevorzugt mindestens 2,5 Gewichtsprozent, am meisten bevorzugt mindestens 5 Gewichtsprozent beträgt,
und/oder
wobei die Konzentration der weiteren Substanz in der Flüssigkeit höchstens 45 Gewichtsprozent, bevorzugt höchstens 35 Gewichtsprozent, mehr bevorzugt höchstens 25 Gewichtsprozent, noch mehr bevorzugt höchstens 15 Gewichtsprozent, am meisten bevorzugt höchstens 10 Gewichtsprozent beträgt.

5. Verfahren gemäß einem der vorstehenden Ansprüche,
wobei die Trägersubstanz Wasser enthält,
wobei bevorzugt die Konzentration des Wassers in der Flüssigkeit mindestens 65 Gewichtsprozent, mehr bevorzugt mindestens 75 Gewichtsprozent, noch mehr bevorzugt mindestens 85 Gewichtsprozent, am meisten bevorzugt mindestens 90 Gewichtsprozent beträgt,
und/oder
wobei bevorzugt die Konzentration des Wassers in der Flüssigkeit höchstens 99,5 Gewichtsprozent, mehr bevorzugt höchstens 99 Gewichtsprozent, noch mehr bevorzugt höchstens 97,5 Gewichtsprozent, am meisten bevorzugt höchstens 95 Gewichtsprozent beträgt.

6. Verfahren gemäß einem der vorstehenden Ansprüche,
wobei das pulverförmige Aufbaumaterial (15) mindestens eines der Polymere aus der Gruppe bestehend aus Polyetherimiden, Polycarbonaten, Polyphenylensulfonen, Polyphenylenoxiden, Polyethersulfonen, Acrylnitril-Butadien-Styrol-Copolymerisaten, Polyacrylaten, Polyestern, Polyamiden, Polyaryletherketonen, Polyethern, Polyurethanen, Polyimiden, Polyamidimiden, Polyolefinen sowie Copolymeren, welche mindestens zwei verschiedene Monomereinheiten der vorgenannten Polymere enthalten, und/oder mindestens ein Polyblend auf der Basis von mindestens zwei der vorgenannten Polymere und Copolymere enthält,
wobei das pulverförmige Aufbaumaterial bevorzugt ein Polyamid enthält,
wobei das pulverförmige Aufbaumaterial mehr bevorzugt ein PA12 enthält.

7. Verfahren gemäß Anspruch 6,
wobei die weitere Substanz eine Substanz ist, die bei der Herstellung des pulverförmigen Aufbaumaterials (15) zur Anwendung gekommen ist.

8. Verfahren gemäß einem der vorstehenden Ansprüche,
wobei das Behandeln mit der Flüssigkeit (33) dadurch erfolgt, dass das unverfestigte Aufbaumaterial (13) zumindest teilweise in die Flüssigkeit (33) eingetaucht wird bzw. das dreidimensionale Objekt (2) und das unverfestigte Aufbaumaterial (13) zumindest teilweise in die Flüssigkeit (33) eingetaucht werden,
wobei insbesondere eine Kraft auf das unverfestigte Aufbaumaterial (13) bzw. das dreidimensionale Objekt (2) und das unverfestigte Aufbaumaterial (13) ausgeübt wird, die der Auftriebskraft, die auf das unverfestigte Aufbaumaterial (13) bzw. das dreidimensionale Objekt (2) und das unverfestigte Aufbaumaterial (13) wirkt, entgegengerichtet ist.

9. Verfahren gemäß einem der vorstehenden Ansprüche,
wobei das unverfestigte Aufbaumaterial (13), insbesondere in Kanälen und/oder Hohlräumen des dreidimensionalen Objekts befindliches unverfestigtes Aufbaumaterial (13), vom dreidimensionalen Objekt (2) abgelöst wird,
wobei das unverfestigte Aufbaumaterial (13) mit Ultraschall und/oder Infraschall und/oder mit einem Strahl, insbesondere mit einem Strahl der Flüssigkeit (33), behandelt wird bzw. das dreidimensionale Objekt (2) und das unverfestigte Aufbaumaterial (13) mit Ultraschall und/oder Infraschall und/oder mit einem Strahl, insbesondere mit einem Strahl der Flüssigkeit (33), behandelt werden,
und/oder
wobei zumindest die Flüssigkeit (33) in Bewegung versetzt, insbesondere geschüttelt und/oder gerührt und/oder geschwenkt wird.

10. Verfahren gemäß einem der vorstehenden Ansprüche,
wobei das Trocknen mittels einer Zentrifuge und/oder mittels eines Gasstroms und/oder mittels einer Heizung durchgeführt wird.

11. Verfahren gemäß einem der vorgenannten Ansprüche,
wobei das Nachbehandeln in mindestens zwei nacheinander durchgeführten Nachbehandlungsschritten erfolgt, und
wobei mindestens ein Nachbehandlungsschritt mit Hilfe einer weiteren Flüssigkeit erfolgt.

12. Verfahren gemäß einem der vorgenannten Ansprüche,
wobei das Nachbehandeln in mindestens zwei nacheinander durchgeführten Nachbehandlungsschritten erfolgt, und
wobei mindestens ein Nachbehandlungsschritt das Abwarten einer vorbestimmten Pausenzeit umfasst.

13. Verfahren gemäß einem der vorgenannten Ansprüche,
wobei die Flüssigkeit (33) nach dem Nachbehandeln zumindest teilweise regeneriert, insbesondere durch Sedimentieren und/oder Filtrieren von unverfestigtem Aufbaumaterial (13) gereinigt wird.

14. Nachbehandlungssystem zum Nachbehandeln eines unverfestigten Aufbaumaterials (13), in das ein durch selektives schichtweises Verfestigen eines pulverförmigen Aufbaumaterials (15) hergestelltes dreidimensionales Objekt (2) eingebettet ist, oder des dreidimensionalen Objekts (2) und des unverfestigten Aufbaumaterials (13), in das das hergestellte dreidimensionale Objekt (2) eingebettet ist, umfassend
eine Nachbehandlungsvorrichtung (30), in der das unverfestigte Aufbaumaterial (13) bzw. das hergestellte dreidimensionale Objekt (2) und das unverfestigte Aufbaumaterial (13) im Betrieb mit einer Flüssigkeit (33) behandelt werden,
eine Bereitstellungsanordnung zur Bereitstellung der Flüssigkeit (33) dergestalt, dass sie eine flüssige Trägersubstanz und mindestens eine weitere Substanz, die die Oberflächenspannung der Trägersubstanz herabsetzt, enthält, und
eine Trocknungsvorrichtung zum Trocknen zumindest eines Teils des mit der Flüssigkeit behandelten unverfestigten Aufbaumaterials bzw. des mit der Flüssigkeit behandelten dreidimensionalen Objekts und des mit der Flüssigkeit behandelten unverfestigten Aufbaumaterials.

## Claims

1. A method of post-treating an unsolidified building material (13), in which a three-dimensional object (2) produced by selectively layer-wise solidifying a pulverulent building material (15) is embedded, or of the three-dimensional object (2) and the unsolidified building material (13), in which the manufactured three-dimensional object (2) is embedded, comprising the steps of:
- treating the unsolidified building material or the manufactured three-dimensional object (2) and the unsolidified building material (13) with a liquid (33), and
- drying at least a part of the unsolidified building material treated with the liquid, or of the three-dimensional object treated with the liquid and of the unsolidified building material treated with the liquid,
wherein the liquid (33) comprises a liquid carrier substance and at least one further substance which reduces the surface tension of the carrier substance.

2. The method according to claim 1,
wherein the further substance is volatile, in particular more volatile than the carrier substance.

3. The method according to one of the preceding claims,
wherein the further substance is an alcohol, preferably an acyclic alcohol, more preferably an acyclic alcohol having a molecular formula CₙH₂ₙ₊₂O with n = 1, 2, 3 or 4, even more preferably ethanol.

4. The method according to one of the preceding claims,
wherein the concentration of the further substance in the liquid is at least 0.1 percent by weight, preferably at least 0.5 percent by weight, more preferably at least 1 percent by weight, still more preferably at least 2.5 percent by weight, most preferably at least 5 percent by weight,
and/or
wherein the concentration of the further substance in the liquid is at most 45 percent by weight, preferably at most 35 percent by weight, more preferably at most 25 percent by weight, still more preferably at most 15 percent by weight, most preferably at most 10 percent by weight.

5. The method according to one of the preceding claims,
wherein the carrier substance comprises water,
wherein preferably the concentration of water in the liquid is at least 65 percent by weight, more preferably at least 75 percent by weight, still more preferably at least 85 percent by weight, most preferably at least 90 percent by weight,
and/or
wherein preferably the concentration of water in the liquid is at most 99.5 percent by weight, more preferably at most 99 percent by weight, still more preferably at most 97.5 percent by weight, most preferably at most 95 percent by weight.

6. The method according to one of the preceding claims,
wherein the pulverulent building material (15) comprises at least one of the polymers selected from the group consisting of polyetherimides, polycarbonates, polyphenylene sulfones, polyphenylene oxides, polyether sulfones, acrylonitrile-butadiene-styrene copolymers, polyacrylates, polyesters, polyamides, polyaryl ether ketones, polyethers, polyurethanes, polyimides, polyamide-imides, polyolefins and copolymers which contain at least two different monomer units of the aforementioned polymers, and/or at least one polyblend based on at least two of the aforementioned polymers and copolymers,
wherein the pulverulent building material preferably contains a polyamide,
wherein the pulverulent building material more preferably contains a PA12.

7. The method according to claim 6,
wherein the further substance is a substance that was used in the production of the pulverulent building material (15).

8. The method according to one of the preceding claims,
wherein the treatment with the liquid (33) is carried out by at least partially immersing the unsolidified building material (13) in the liquid (33) or by at least partially immersing the three-dimensional object (2) and the unsolidified building material (13) in the liquid (33),
wherein, in particular, a force is exerted on the unsolidified building material (13) or on the three-dimensional object (2) and the unsolidified building material (13), which force is directed opposite to the buoyancy force acting on the unsolidified building material (13) or on the three-dimensional object (2) and the unsolidified building material (13).

9. The method according to one of the preceding claims,
wherein the unsolidified building material (13), in particular unsolidified building material (13) located in channels and/or cavities of the three-dimensional object, is detached from the three-dimensional object (2),
wherein the unsolidified building material (13) is treated with ultrasound and/or infrasound and/or with a jet, in particular with a jet of the liquid (33), or the three-dimensional object (2) and the unsolidified building material (13) are treated with ultrasound and/or infrasound and/or with a jet, in particular with a jet of the liquid (33),
and/or
wherein at least the liquid (33) is set in motion, in particular shaken and/or stirred and/or swiveled.

10. The method according to one of the preceding claims,
wherein the drying is implemented by means of a centrifuge and/or by means of a gas flow and/or by means of a heater.

11. The method according to one of the preceding claims,
wherein the post-treatment is carried out in at least two post-treatment steps carried out in succession, and
wherein at least one post-treatment step is carried out with the aid of a further liquid.

12. The method according to one of the preceding claims,
wherein the post-treatment is carried out in at least two post-treatment steps carried out in succession, and
wherein at least one post-treatment step comprises waiting for a predetermined resting time.

13. The method according to one of the preceding claims,
wherein the liquid (33) is at least partially regenerated after the post-treatment, in particular is cleared by sedimentation and/or filtration of unsolidified building material (13).

14. A post-treatment system for post-treating an unsolidified building material (13) in which a three-dimensional object (2) is embedded that is produced by selectively layer-wise solidifying a pulverulent building material (15), or of the three-dimensional object (2) and the unsolidified building material (13) in which the manufactured three-dimensional object (2) is embedded, comprising
a post-treatment device (30) in which the unsolidified building material (13) or the manufactured three-dimensional object (2) and the unsolidified building material (13) are treated with a liquid (33) during operation,
a provisioning assembly for providing the liquid (33) in such a way that it contains a liquid carrier substance and at least one further substance which reduces the surface tension of the carrier substance, and
a drying device for drying at least a part of the unsolidified building material treated with the liquid or of the three-dimensional object treated with the liquid and the unsolidified building material treated with the liquid.

## Revendications

1. Procédé de post-traitement d'un matériau de construction non solidifié (13) dans lequel est incorporé un objet tridimensionnel (2) fabriqué par solidification sélective couche par couche d'un matériau de construction pulvérulent (15), ou de l'objet tridimensionnel (2) et du matériau de construction non solidifié (13) dans lequel est incorporé l'objet tridimensionnel fabriqué (2), comprenant les étapes consistant à :
- traiter le matériau de construction non solidifié ou l'objet tridimensionnel fabriqué (2) et le matériau de construction non solidifié (13) avec un liquide (33), et
- sécher au moins une partie du matériau de construction non solidifié traité avec le liquide ou de l'objet tridimensionnel traité avec le liquide et du matériau de construction non solidifié traité avec le liquide,
dans lequel le liquide (33) contient une substance de support liquide et au moins une autre substance qui diminue la tension superficielle de la substance de support.

2. Procédé selon la revendication 1,
où l'autre substance est volatile, en particulier plus volatile que la substance de support.

3. Procédé selon l'une des revendications précédentes,
où l'autre substance est un alcool, de préférence un alcool acyclique, plus préférablement un alcool acyclique avec une formule brute CₙH₂ₙ₊₂O avec n = 1, 2, 3 ou 4, encore plus préférablement l'éthanol.

4. Procédé selon l'une des revendications précédentes,
où la concentration de l'autre substance dans le liquide est d'au moins 0,1 pour cent en poids, de préférence d'au moins 0,5 pour cent en poids, plus préférablement d'au moins 1 pour cent en poids, encore plus préférablement d'au moins 2,5 pour cent en poids, le plus préférablement d'au moins 5 pour cent en poids,
et/ou
où la concentration de l'autre substance dans le liquide est d'au plus 45 pour cent en poids, de préférence d'au plus 35 pour cent en poids, plus préférablement d'au plus 25 pour cent en poids, encore plus préférablement d'au plus 15 pour cent en poids, le plus préférablement d'au plus 10 pour cent en poids.

5. Procédé selon l'une des revendications précédentes,
dans lequel la substance de support contient de l'eau,
où, de préférence, la concentration de l'eau dans le liquide est d'au moins 65 pour cent en poids, plus préférablement d'au moins 75 pour cent en poids, encore plus préférablement d'au moins 85 pour cent en poids, le plus préférablement d'au moins 90 pour cent en poids,
et/ou
où, de préférence, la concentration de l'eau dans le liquide est d'au plus 99,5 pour cent en poids, plus préférablement d'au plus 99 pour cent en poids, encore plus préférablement d'au plus 97,5 pour cent en poids, le plus préférablement d'au plus 95 pour cent en poids.

6. Procédé selon l'une des revendications précédentes,
où le matériau de construction pulvérulent (15) comprend au moins un des polymères choisis dans le groupe constitué par les polyétherimides, les polycarbonates, les polyphénylènesulfones, les polyphénylèneoxydes, les polyéthersulfones, les copolymères acrylonitrile-butadiène-styrène, les polyacrylates, les polyesters, les polyamides, les polyaryléthercétones, les polyéthers, les polyuréthanes, les polyimides, les polyamideimides, les polyoléfines ainsi que les copolymères qui contiennent au moins deux unités monomères différentes des polymères susmentionnés, et/ou au moins un polymélange à base d'au moins deux des polymères et copolymères susmentionnés,
où le matériau de construction pulvérulent contient de préférence un polyamide,
où le matériau de construction pulvérulent contient plus préférablement un PA12.

7. Procédé selon la revendication 6,
dans lequel l'autre substance est une substance qui a été utilisée lors de la fabrication du matériau de construction pulvérulent (15).

8. Procédé selon l'une des revendications précédentes,
dans lequel le traitement avec le liquide (33) est effectué en immergeant au moins partiellement le matériau de construction non solidifié (13) dans le liquide (33) ou en immergeant au moins partiellement l'objet tridimensionnel (2) et le matériau de construction non solidifié (13) dans le liquide (33),
où en particulier une force est exercée sur le matériau de construction non solidifié (13) ou sur l'objet tridimensionnel (2) et le matériau de construction non solidifié (13) qui est opposée à la force de flottabilité qui agit sur le matériau de construction non solidifié (13) ou sur l'objet tridimensionnel (2) et le matériau de construction non solidifié (13).

9. Procédé selon l'une des revendications précédentes,
où le matériau de construction non solidifié (13), en particulier le matériau de construction non solidifié (13) se trouvant dans des canaux et/ou des cavités de l'objet tridimensionnel, est détaché de l'objet tridimensionnel (2),
où le matériau de construction non solidifié (13) est traité avec des ultrasons et/ou des infra-sons et/ou avec un jet, en particulier avec un jet du liquide (33), ou l'objet tridimensionnel (2) et le matériau de construction non solidifié (13) sont traités avec des ultrasons et/ou des infra-sons et/ou avec un jet, en particulier avec un jet du liquide (33),
et/ou
où au moins le liquide (33) est mis en mouvement, en particulier secoué et/ou agité et/ou pivoté.

10. Procédé selon l'une des revendications précédentes,
où le séchage est effectué au moyen d'une centrifugeuse et/ou au moyen d'un flux de gaz et/ou au moyen d'un chauffage.

11. Procédé selon l'une des revendications précédentes,
où le post-traitement est effectué en au moins deux étapes de post-traitement effectuées l'une après l'autre, et
où au moins une étape de post-traitement est effectuée à l'aide d'un autre liquide.

12. Procédé selon l'une des revendications précédentes,
où le post-traitement est effectué en au moins deux étapes de post-traitement effectuées l'une après l'autre, et
où au moins une étape de post-traitement comprend l'attente d'un temps de pause prédéterminé.

13. Procédé selon l'une des revendications précédentes,
où le liquide (33) est au moins partiellement régénéré après le post-traitement, en particulier purifié par sédimentation et/ou filtration du matériau de construction non solidifié (13).

14. Système de post-traitement pour le post-traitement d'un matériau de construction non solidifié (13) dans lequel est incorporé un objet tridimensionnel (2) fabriqué par solidification sélective couche par couche d'un matériau de construction pulvérulent (15), ou de l'objet tridimensionnel (2) et du matériau de construction non solidifié (13) dans lequel est incorporé l'objet tridimensionnel fabriqué (2), comprenant
un dispositif de post-traitement (30) dans lequel le matériau de construction non solidifié (13) ou l'objet tridimensionnel fabriqué (2) et le matériau de construction non solidifié (13) sont traités en fonctionnement avec un liquide (33),
un agencement de mise à disposition pour la mise à disposition du liquide (33) de telle sorte qu'il contient une substance de support liquide et au moins une autre substance qui diminue la tension superficielle de la substance de support, et
un dispositif de séchage pour sécher au moins une partie du matériau de construction non solidifié traité avec le liquide ou de l'objet tridimensionnel traité avec le liquide et du matériau de construction non solidifié traité avec le liquide.
